# EUROPEAN PATENT APPLICATION

(11) **EP 3 703 029 A1**
(43) Date of publication of application: **02.09.2020**
(21) Application number: 19159478.7
(22) Date of filing: 26.02.2019
(51) Int. Cl.: G08G 1/0967, G08G 1/16

(54) **MITIGATING COLLISION RISK WITH AN OBSCURED OBJECT**

(71) Applicant: Ningbo Geely Automobile Research & Development Co. Ltd., Hangzhou Bay New District Ningbo 315336 (CN)
(72) Inventor: LINDBERG NILSSON, Erik, 417 47 GÖTEBORG (SE); JOHANSSON, Jonathan, 417 14 GÖTEBORG (SE)
(74) Representative: Zacco Sweden AB

(57) **Abstract**

A method for reducing a risk of collision with an obscured object. The method comprises detecting (101), by a detector, the object in proximity of the detector, and determining (102), by the detector, object data of the detected object in response to the detection. The method further comprises determining (103), by the detector, any vehicle in motion in a direction towards an area where the detected object is or may be present, and transmitting (104), by the detector, the determined object data of the detected object to the vehicle. The method furthermore comprises receiving (105), by the vehicle, the transmitted object data, processing (106), by the vehicle, the received object data to assess a collision risk based on a predicted route of the vehicle, and mitigating the collision risk (108), in the vehicle, based on the processed object data when the collision risk has been assessed.

Corresponding computer program product, arrangements, and system are also disclosed.

## Description

### TECHNICAL FIELD

The present disclosure relates generally to the field of vehicles at risk of collision with an obscured object. More particularly, it relates to reducing a risk of collision with an obscured object.

### BACKGROUND

Vehicle detection systems e.g. camera systems are limited in the sense that they are only able to detect what the vehicle or the vehicle occupant can see, not what the vehicle or the vehicle occupant need to see in order to avoid a collision.

In environments where pedestrians or cyclists in a traffic situation are obscured by e.g. vegetation, buildings, or parked vehicles, the detection performance is low.

Hence, there is a need for alternative approaches to reducing a risk of collision with an obscured object.

### SUMMARY

It should be emphasized that the term "comprises/comprising" when used in this specification is taken to specify the presence of stated features, integers, steps, or components, but does not preclude the presence or addition of one or more other features, integers, steps, components, or groups thereof. As used herein, the singular forms "a", "an" and "the" are intended to include the plural forms as well, unless the context clearly indicates otherwise.

Generally, when an arrangement is referred to herein, it is to be understood as a physical product; e.g., an apparatus. The physical product may comprise one or more parts, such as controlling circuitry in the form of one or more controllers, one or more processors, or the like.

An object of some embodiments is to provide alternative approaches to reducing a risk of collision with an obscured object.

According to a first aspect, this is achieved by a method for reducing a risk of collision with an obscured object.

The method comprises detecting, by a detector, the object in proximity of the detector, and determining, by the detector, object data of the detected object in response to the detection.

The method further comprises determining, by the detector, any vehicle in motion in a direction towards an area where the detected object is or may be present, and transmitting, by the detector, the determined object data of the detected object to the vehicle.

The method furthermore comprises receiving, by the vehicle, the transmitted object data, processing, by the vehicle, the received object data to assess a collision risk based on a predicted route of the vehicle, and mitigating the collision risk, in the vehicle, based on the processed object data when the collision risk has been assessed.

An advantage of some embodiments is that alternative approaches to reducing a risk of collision with an obscured object are provided.

Another advantage of some embodiments is that a real-time adaption to traffic situations is provided for vehicles.

Yet an advantage of some embodiments is that security is improved for both vehicles and objects at risk of collision with vehicles.

Yet another advantage of some embodiments is that a hardware agnostic method is provided.

In some embodiments, the method further comprises discarding, by the vehicle, the received object data when the collision risk has been ruled out.

An advantage of some embodiments is that the vehicle only acts on relevant object data, and therefore avoids false alarms, as it only mitigates the collision risk if there is an actual collision risk for the vehicle enabling an efficient collision risk reducing method.

In some embodiments, the mitigating of the collision risk further comprises warning, in the vehicle, about the detected object and/or displaying, in the vehicle, a representation of the detected object based on the processed object data when the collision risk has been assessed.

An advantage of some embodiments is that the vehicle acts on relevant object data when the collision risk has been assessed to be an actual collision risk by alerting the vehicle occupant(s) either by a warning and/or a display of a warning to avoid a collision.

In some embodiments, the mitigating of the collision risk further comprises automatically re-routing or braking or adjusting a speed of the vehicle.

An advantage of some embodiments is that a security system in the vehicle may be adapted to act on relevant object data when the collision risk has been assessed to be an actual collision risk by taking actions e.g. re-routing or braking or adjusting the speed automatically to avoid a collision.

In some embodiments, the object data comprises non-image information.

An advantage of some embodiments is that complete image data of the detected object is not determined nor transmitted hence less data is needed which provides for an efficient and hardware agnostic collision risk reducing method.

In some embodiments, the object data comprises any one or all of position data, velocity vector data, and object type data.

An advantage of some embodiments is that the detector and the vehicle may detect and act differently on the object data based on their capabilities providing for a flexible collision risk method.

In some embodiments, the detector comprises a sensor arranged on any one of a moving vehicle, a non-moving vehicle, a building, a wall, a lamp-post, and road-side unit.

An advantage of some embodiments is that sensor detection of objects is widely enabled i.e. covering different types of angles and areas so that blind spots where obscured objects are or may be present are minimized.

In some embodiments, the detecting of the object comprises detecting by any one of camera detection, radar detection, LIDAR detection, GPS detection, and wearable device detection.

An advantage of some embodiments is that detection of objects is widely enabled i.e. detected by different detection means separately or together e.g. by sensor fusion so that detection of obscured objects is as accurate as possible.

In some embodiments, the processing of the received object data comprises determining a position of the detected object in relation to the vehicle based on the received object data.

An advantage of some embodiments is that the vehicle and possibly a security system in the vehicle is able to take actions to mitigate the collision risk based on the determined position of the detected object.

In some embodiments, the processing of the received object data further comprises determining a speed and direction of the detected object in relation to the vehicle based on the received object data.

An advantage of some embodiments is that the vehicle and possibly a security system in the vehicle is able to take actions to mitigate the collision risk based on the speed and direction of the detected object.

According to a second aspect, this is achieved by a computer program product comprising a non-transitory computer readable medium, having thereon a computer program comprising program instructions, the computer program being loadable into a data processing unit and configured to cause execution of the method steps performed by the detector and/or the method steps performed by the vehicle according to the first aspect when the computer program is run by the data processing unit.

According to a third aspect, this is achieved by an arrangement for reducing a risk of collision with an obscured object.

The arrangement comprises a memory comprising executable instructions, one or more processors configured to communicate with the memory wherein the one or more processors are configured to cause the arrangement to detect the object in proximity of a detector, and determine object data of the detected object in response to the detection.

The one or more processors are further configured to cause the arrangement to determine any vehicle in motion in a direction towards an area where the detected object is or may be present, and transmit the determined object data of the detected object to the vehicle.

An advantage of some embodiments is that alternative approaches to reducing a risk of collision with an obscured object are provided.

Another advantage of some embodiments is that a real-time adaption to traffic situations is provided for vehicles.

Yet an advantage of some embodiments is that security is improved for both vehicles and objects at risk of collision with vehicles.

Yet another advantage of some embodiments is that a hardware agnostic arrangement is provided.

In some embodiments, the arrangement comprises a sensor arranged on any one of a moving vehicle, a non-moving vehicle, a building, a wall, a lamp-post, and road-side unit.

An advantage of some embodiments is that sensor detection of objects is widely enabled i.e. covering different types of angles and areas so that blind spots where obscured objects are or may be present are minimized.

According to a fourth aspect, this is achieved by an arrangement for reducing a risk of collision with an obscured object.

The arrangement comprises a memory comprising executable instructions, one or more processors configured to communicate with the memory wherein the one or more processors are configured to cause the arrangement to receive object data of the object, and process the received object data to assess the collision risk based on a predicted route.

The one or more processors are further configured to cause the arrangement to mitigate the collision risk based on the processed object data when the collision risk has been assessed.

An advantage of some embodiments is that alternative approaches to reducing a risk of collision with an obscured object are provided.

Another advantage of some embodiments is that a real-time adaption to traffic situations is provided for vehicles.

Yet an advantage of some embodiments is that security is improved for both vehicles and objects at risk of collision with vehicles.

Yet another advantage of some embodiments is that a hardware agnostic arrangement is provided.

In some embodiments, wherein the one or more processors are configured to further cause the arrangement to discard the received object data when the collision risk has been ruled out.

An advantage of some embodiments is that the vehicle only acts on relevant object data, and therefore avoids false alarms, as it only mitigates the collision risk if there is an actual collision risk for the vehicle enabling an efficient collision risk reducing method.

In some embodiments, the mitigation of the collision risk comprises warning about the detected object and/or displaying a representation of the detected object based on the processed object data when the collision risk has been assessed.

An advantage of some embodiments is that the arrangement acts on relevant object data when the collision risk has been assessed to be an actual collision risk by alerting the vehicle occupant(s) either by a warning and/or a display of a warning to avoid a collision.

In some embodiments, the mitigation of the collision risk comprises automatically re-routing or braking or adjusting a speed of the vehicle.

An advantage of some embodiments is that a security system in the vehicle may be adapted to act on relevant object data when the collision risk has been assessed to be an actual collision risk by taking actions e.g. re-routing or braking or adjusting the speed automatically to avoid a collision.

According to a fifth aspect, this is achieved by a vehicle comprising the arrangement according to the fourth aspect.

According to a sixth aspect, this is achieved by a system for reducing a risk of collision with an obscured object.

The system comprises a detecting module configured to detect an object in proximity of a detector, and a determining module configured to determine object data of the detected object in response to the detection.

The system further comprises a determining module configured to determine any vehicle in motion in a direction towards an area where the detected object is or may be present, and a transmitting module configured to transmit the determined object data of the detected object to the vehicle,

The system furthermore comprises a receiving module configured to receive the transmitted object data, a processing module configured to process the received object data to assess the collision risk based on a predicted route of the vehicle, and a risk mitigation module configured to mitigate the collision risk based on the processed object data when the collision risk has been assessed.

An advantage of some embodiments is that alternative approaches to reducing a risk of collision with an obscured object are provided.

Another advantage of some embodiments is that a real-time adaption to traffic situations is provided for vehicles.

Yet an advantage of some embodiments is that security is improved for both vehicles and objects at risk of collision with vehicles.

Yet another advantage of some embodiments is that a hardware agnostic system is provided.

In some embodiments, any of the above aspects may additionally have features identical with or corresponding to any of the various features as explained above for any of the other aspects.

### BRIEF DESCRIPTION OF THE DRAWINGS

Further objects, features and advantages will appear from the following detailed description of embodiments, with reference being made to the accompanying drawings. The drawings are not necessarily to scale, emphasis instead being placed upon illustrating the example embodiments.
Figure 1 is a flowchart illustrating example method steps according to some embodiments;
Figure 2 is a schematic drawing illustrating an example environment according to some embodiments;
Figure 3 is a schematic drawing illustrating an example environment according to some embodiments;
Figure 4 is a schematic block diagram illustrating an example arrangement according to some embodiments; and
Figure 5 is a schematic drawing illustrating an example computer readable medium according to some embodiments.

### DETAILED DESCRIPTION

As already mentioned above, it should be emphasized that the term "comprises/comprising" when used in this specification is taken to specify the presence of stated features, integers, steps, or components, but does not preclude the presence or addition of one or more other features, integers, steps, components, or groups thereof. As used herein, the singular forms "a", "an" and "the" are intended to include the plural forms as well, unless the context clearly indicates otherwise.

Embodiments of the present disclosure will be described and exemplified more fully hereinafter with reference to the accompanying drawings. The solutions disclosed herein can, however, be realized in many different forms and should not be construed as being limited to the embodiments set forth herein.

In the following, embodiments will be described where alternative approaches to reducing a risk of collision with an obscured object.

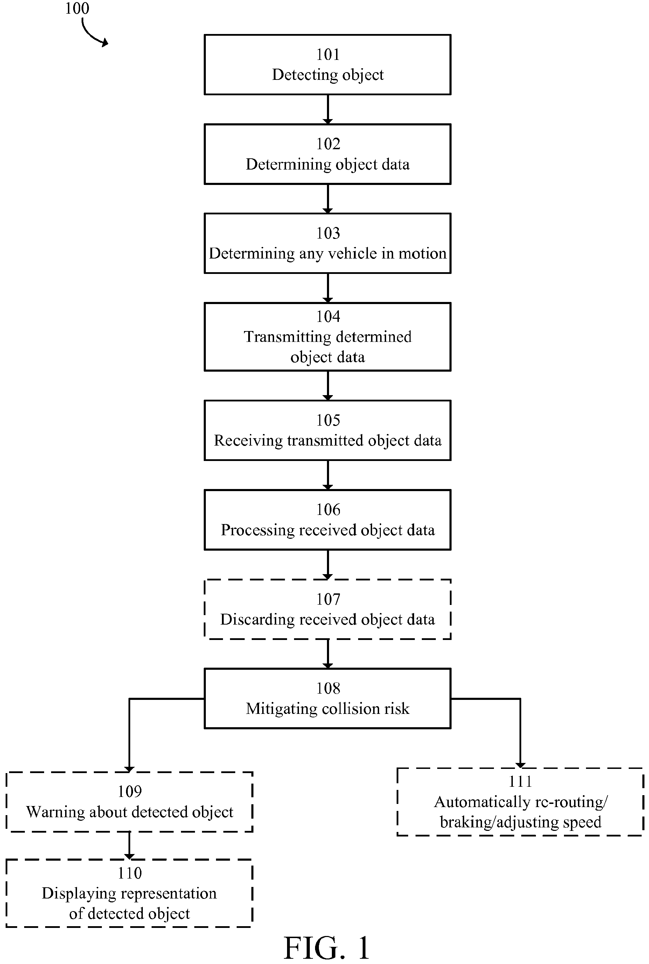

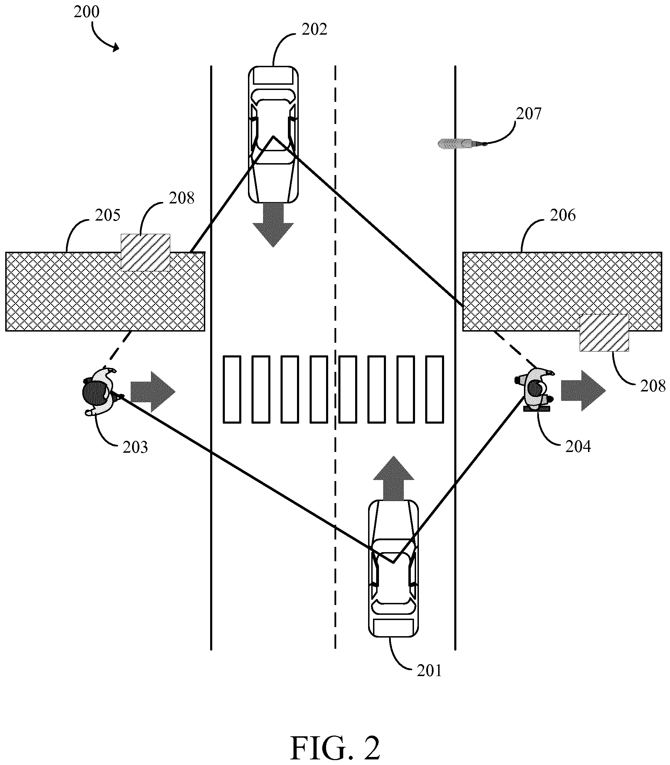

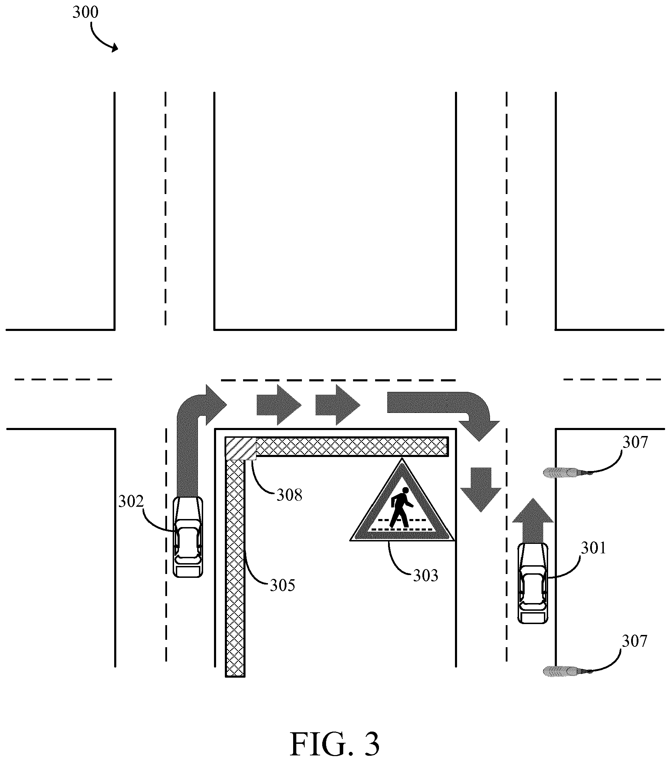

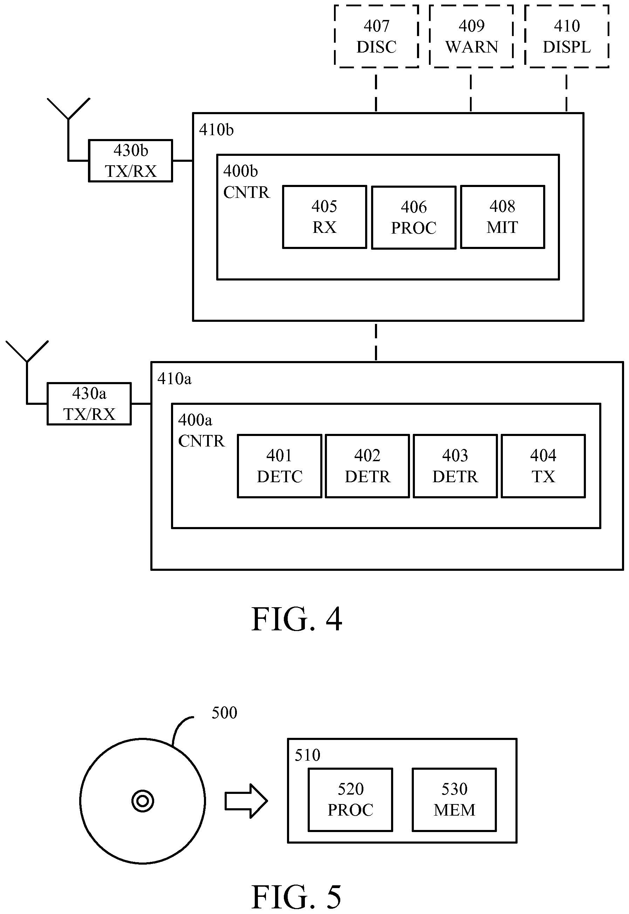

Figure 1 is a flowchart illustrating example method steps according to some embodiments. The collision risk reducing method 100 is for reducing a risk of collision with an obscured object. Thus, the collision risk reducing method 100 may, for example, be performed by the collision risk reducing arrangement of Figure 4 for reducing a risk of collision with an obscured object as illustrated in example environments in Figures 2 and 3.

The collision risk reducing method 100 comprises following steps.

In step 101, an object in proximity of a detector is detected by a detector.

As an example, the object may be a pedestrian e.g. an adult or a child, or a cyclist, or an animal etc.

As an example, a detector may comprise a sensor arranged on any one of a moving vehicle, a non-moving vehicle, a building, a wall, a lamp-post, and road-side unit.

As an example, the sensor may be configured to detect the object by any one of camera detection, radar detection, LIDAR detection, GPS detection, and wearable device detection e.g. via 3G/4G/5G or a GPS location provided by a wearable device such as a smart phone.

As an example, in proximity may comprise a distance of 10 meters.

In step 102, object data of the detected object is determined by the detector in response to the detection.

As an example, object data may comprise any one or all of position data, velocity vector data, and object type data. This kind of object data may be regarded as non-image information as only parameters relating to the detected object are determined and not the whole image e.g. surroundings around the detected object are discarded as it is not relevant from a detection perspective.

Position data may comprise coordinates of where the detected object is at the time of the detection.

Velocity vector data may comprise direction and speed of the detected object at the time of the detection.

Object type data may comprise data defining the detected object at the time of the detection e.g. if the detected object is a pedestrian and/or if the detected pedestrian is an adult or a child, or if the detected object is a cyclist, or if the detected object is an animal etc.

Based on the position data, velocity vector data and the object type data a position, type and movement of the detected object may be determined.

Hence, based on the object data of the detected object a position, speed and direction of the detected object may be determined in relation to the vehicle.

In step 103, any vehicle in motion in a direction towards an area where the detected object is or may be present is determined by the detector.

As an example, the detector may be able to detect a vehicle in motion towards an area where the detected object is or may be present from a distance of e.g. 50-100 meters.

In step 104, the determined object data of the detected object is transmitted by the detector to the vehicle.

As only the object data which may be regarded as non-image information is transmitted, i.e. in this way avoiding to transmit a whole image, a more efficient, i.e. by avoiding to overload the communication channels with redundant information, and hardware agnostic, i.e. as the object data is compatible with any type of hardware, method is achieved.

As an example, the transmission of object data may be enabled via Vehicle-to-Vehicle (V2V) communication wherein the V2V communication enables an exchange of signals, i.e. information, between V2V communication enabled vehicles.

As another example, the transmission of the object data may be enabled via Vehicle-to-Infrastructure (V2I) communication wherein the V2I communication enables an exchange of signals, i.e. information, between V2I communication enabled vehicle and infrastructure.

As a further example, the transmission of the object data may be enabled via Vehicle-to-Anything (V2X) communication wherein the V2X communication enables an exchange of signals, i.e. information, between V2X communication enabled vehicle and other device.

Moreover, the transmission of the object data may be enabled via 3G/4G/5G enabled communication technology or any other communication technology.

In step 105, the transmitted object data is received by the vehicle.

As an example, the reception of object data may be enabled via V2V or V2I or V2X communication or via 3G/4G/5G enabled communication technology or any other communication technology according to above transmission examples.

In step 106, the received object data is processed to assess a collision risk based on a predicted route of the vehicle by the vehicle.

As an example, the processing of the object data may comprise data analysis in order to determine if the properties of the detected object may result in that the detected object overlaps with the predicted route of the vehicle.

In optional step 107, the received object data is discarded when the collision risk has been ruled out by the vehicle.

In step 108, the collision risk is mitigated based on the processed object data when the collision risk has been assessed in the vehicle.

As an example, the vehicle may determine that the collision risk must be mitigated through an action of the vehicle.

In optional step 109, the mitigation comprises warning about the detected object in the vehicle.

As an example, the warning may comprise a warning sound which increases the closer the vehicle gets to the detected object.

As an example, the warning of the collision risk may be executed by a security system in the vehicle.

In optional step 110, a representation of the detected object is displayed based on the processed object data when the collision risk has been assessed in the vehicle.

As an example, the representation may comprise a highlighted shape e.g. a rectangle displayed on a heads-up display (HUD) in the vehicle at the position where the detected object is expected to be present based on the object data or a pre-determined figure chosen from a plurality of pre-determined figures displayed on the HUD based on the object data.

In optional step 111, the mitigation comprises automatically re-routing or braking or adjusting a speed of the vehicle.

As an example, the automatic actions in response to the collision risk may be executed by a security system in the vehicle.

Figure 2 is a schematic drawing illustrating an example environment according to some embodiments. The example environment 200 illustrates reducing a risk of collision with an obscured object. Thus, the collision risk reducing method 100 may, for example, be performed by the collision risk reducing arrangement 410a,410b of Figure 4 for reducing a risk of collision with an obscured object in an example environment 200 as in Figure 2.

Figure 2 illustrates an environment 200 comprising a first vehicle 201 wherein the first vehicle 201 comprises an arrangement for reducing a risk of collision with an obscured object comprising a memory comprising executable instructions and one or more processors configured to communicate with the memory.

The one or more processors are configured to cause the arrangement in the first vehicle 201 to detect the objects 203,204, e.g. obscured pedestrians about to cross or already crossed the street, in proximity of a detector comprised in the first vehicle 201 and/or a lamp-post 207 and/or a detector 208 mounted on a wall 205,206, and determine object data of the detected objects 203,204 in response to the detection.

The one or more processors are further configured to cause the arrangement to determine any vehicle in motion, e.g. a second vehicle 202, in a direction towards an area where the detected object 203,204 is or may be present, and transmit the determined object data of the detected objects 203,204 to the second vehicle 202.

In some embodiments, the detector comprises a sensor 208 arranged on any one of a moving vehicle 202, a non-moving vehicle (not shown), a building (not shown), a wall 205,206, a lamp-post 207, and road-side unit (not shown).

Figure 3 is a schematic drawing illustrating an example environment according to some embodiments. The example environment 300 illustrates reducing a risk of collision with an obscured object. Thus, the collision risk reducing method 100 may, for example, be performed by the collision risk reducing arrangement 410a,410b of Figure 4 for reducing a risk of collision with an obscured object in an example environment 300 as in Figure 3.

Figure 3 illustrates an environment 300 comprising a second vehicle 302 wherein the second vehicle 302 comprises an arrangement for reducing a risk of collision with an obscured object comprising a memory comprising executable instructions and one or more processors configured to communicate with the memory.

The one or more processors are configured to cause the arrangement in the second vehicle 302 to receive object data of the object 303, e.g. obscured pedestrian about to cross the street, and process the received object data to assess the collision risk based on a predicted route.

The one or more processors are further configured to cause the arrangement to mitigate the collision risk based on the processed object data when the collision risk has been assessed.

In some embodiments, the one or more processors are further configured to cause the arrangement to discard the received object data when the collision risk has been ruled out.

In some embodiments, the detector comprises a sensor 308 arranged on any one of a moving vehicle 301, a non-moving vehicle (not shown), a building (not shown), a wall 305, a lamp-post 307, and road-side unit (not shown).

The sensor 308 may be mounted on a wall 305 and positioned such that the angle of the sensor 308 covers the most critical parts of the intersection so that any blind spots are minimized.

In some embodiments, the mitigation of the collision risk comprises warning about the detected object and/or displaying a representation of the detected object in the second vehicle 302 based on the processed object data when the collision risk has been assessed.

In some embodiments, the mitigation of the collision risk comprises automatically re-routing or braking or adjusting a speed of the second vehicle 302.

Figure 4 is a schematic block diagram illustrating an example arrangement according to some embodiments. The example arrangement is a collision risk reducing arrangement 410a,410b for reducing a risk of collision with an obscured object. Thus, the collision risk reducing method 100 may, for example, be performed by the collision risk reducing arrangement 410a,410b of Figure 4 for reducing a risk of collision with an obscured object as illustrated in example environments 200,300 in Figures 2 and 3.

The collision risk reducing arrangement 410a comprises controlling circuitry CNTR 400a, which may in turn comprise a detecting module DETC 401, e.g. detecting circuitry, configured to detect an object in proximity of a detector, a determining module DETR 402, e.g. determining circuitry, configured to determine object data of the detected object in response to the detection, a determining module DETR 403, e.g. determining circuitry, configured to determine any vehicle in motion in a direction towards an area where the detected object is or may be present, and a transmitting module TX 404, e.g. transmitting circuitry, configured to transmit the determined object data of the detected object to the vehicle.

The collision risk reducing arrangement 410a may be comprised in a detector.

The collision risk reducing arrangement 410b comprises controlling circuitry CNTR 400b, which may in turn comprise a receiving module RX 405, e.g. receiving circuitry, configured to receive the transmitted object data, a processing module PROC 406, e.g. processing circuitry, configured to process the received object data to assess the collision risk based on a predicted route of the vehicle, and a risk mitigation module MIT 408, e.g. risk mitigating circuitry, configured to mitigate the collision risk based on the processed object data when the collision risk has been assessed.

The collision risk reducing arrangement 410b may be comprised in a vehicle.

The collision risk reducing arrangements 410a and 410b may be wirelessly connected and communicate over e.g. V2V, V2I, V2X communication or 3G/4G/5G enabled communication technology or any other communication technology.

In some embodiments, the controlling circuitry CNTR 400b may further comprise a discarding arrangement DISC 407, e.g. discarding circuitry, configured to discard the received object data when the collision risk has been ruled out.

In some embodiments, the controlling circuitry CNTR 400b may further comprise a warning arrangement WARN 409, e.g. warning circuitry, configured to warn about the detected object.

In some embodiments, the controlling circuitry CNTR 400b may further comprise a display arrangement DISPL 410, e.g. displaying circuitry, configured to display a representation of the detected object.

The collision risk reducing arrangements 410a,410b may be configured to perform method steps of any of the methods described in connection with Figure 1.

Figure 5 is a schematic drawing illustrating an example computer readable medium according to some embodiments. The computer program product comprises a non-transitory computer readable medium 500 having thereon a computer program 510 comprising program instructions, wherein the computer program being loadable into a data processing unit and configured to cause execution of the method steps of any of the methods described in connection with Figure 1.

Generally, when an arrangement is referred to herein, it is to be understood as a physical product; e.g., an apparatus. The physical product may comprise one or more parts, such as controlling circuitry in the form of one or more controllers, one or more processors, or the like.

The described embodiments and their equivalents may be realized in software or hardware or a combination thereof. The embodiments may be performed by general purpose circuitry. Examples of general purpose circuitry include digital signal processors (DSP), central processing units (CPU), co-processor units, field programmable gate arrays (FPGA) and other programmable hardware. Alternatively or additionally, the embodiments may be performed by specialized circuitry, such as application specific integrated circuits (ASIC). The general purpose circuitry and/or the specialized circuitry may, for example, be associated with or comprised in an apparatus such as a vehicle.

Embodiments may appear within an electronic apparatus (associated with or comprised in a vehicle) comprising arrangements, circuitry, and/or logic according to any of the embodiments described herein. Alternatively or additionally, an electronic apparatus (associated with or comprised in a vehicle) may be configured to perform methods according to any of the embodiments described herein.

According to some embodiments, a computer program product comprises a computer readable medium such as, for example a universal serial bus (USB) memory, a plug-in card, an embedded drive or a read only memory (ROM). Figure 5 illustrates an example computer readable medium in the form of a compact disc (CD) ROM 500. The computer readable medium has stored thereon a computer program comprising program instructions. The computer program is loadable into a data processor (PROC) 520, which may, for example, be comprised in an apparatus or vehicle 510. When loaded into the data processing unit, the computer program may be stored in a memory (MEM) 530 associated with or comprised in the data-processing unit. According to some embodiments, the computer program may, when loaded into and run by the data processing unit, cause execution of method steps according to, for example, any of the methods illustrated in Figure 1 or otherwise described herein.

Generally, all terms used herein are to be interpreted according to their ordinary meaning in the relevant technical field, unless a different meaning is clearly given and/or is implied from the context in which it is used.

Reference has been made herein to various embodiments. However, a person skilled in the art would recognize numerous variations to the described embodiments that would still fall within the scope of the claims.

For example, the method embodiments described herein discloses example methods through steps being performed in a certain order. However, it is recognized that these sequences of events may take place in another order without departing from the scope of the claims. Furthermore, some method steps may be performed in parallel even though they have been described as being performed in sequence. Thus, the steps of any methods disclosed herein do not have to be performed in the exact order disclosed, unless a step is explicitly described as following or preceding another step and/or where it is implicit that a step must follow or precede another step.

In the same manner, it should be noted that in the description of embodiments, the partition of functional blocks into particular units is by no means intended as limiting. Contrarily, these partitions are merely examples. Functional blocks described herein as one unit may be split into two or more units. Furthermore, functional blocks described herein as being implemented as two or more units may be merged into fewer (e.g. a single) unit.

Any feature of any of the embodiments disclosed herein may be applied to any other embodiment, wherever suitable. Likewise, any advantage of any of the embodiments may apply to any other embodiments, and vice versa.

Hence, it should be understood that the details of the described embodiments are merely examples brought forward for illustrative purposes, and that all variations that fall within the scope of the claims are intended to be embraced therein.

## Claims

1. A method for reducing a risk of collision with an obscured object, comprising the steps of:
detecting (101), by a detector, the object in proximity of the detector,
determining (102), by the detector, object data of the detected object in response to the detection,
determining (103), by the detector, any vehicle in motion in a direction towards an area where the detected object is or may be present,
transmitting (104), by the detector, the determined object data of the detected object to the vehicle,
receiving (105), by the vehicle, the transmitted object data,
processing (106), by the vehicle, the received object data to assess a collision risk based on a predicted route of the vehicle, and
mitigating the collision risk (108), in the vehicle, based on the processed object data when the collision risk has been assessed.

2. The method according to claim 1, further comprising the step of:
discarding (107), by the vehicle, the received object data when the collision risk has been ruled out.

3. The method according to any of claims 1-2, wherein the mitigating of the collision risk further comprises the step of:
warning (109), in the vehicle, about the detected object and/or displaying (110), in the vehicle, a representation of the detected object based on the processed object data when the collision risk has been assessed.

4. The method according to any of claims 1-3, wherein the mitigating of the collision risk further comprises the step of:
automatically re-routing or braking or adjusting a speed (111) of the vehicle.

5. The method according to any of claims 1-4, wherein the object data comprises non-image information.

6. The method according to any of claims 1-5, wherein the object data comprises any one or all of position data, velocity vector data, and object type data.

7. The method according to any of claims 1-6, wherein the detector comprises a sensor arranged on any one of a moving vehicle, a non-moving vehicle, a building, a wall, a lamp-post, and road-side unit.

8. The method according to any of claims 1-7, wherein the detecting of the object comprises detecting by any one of camera detection, radar detection, LIDAR detection, GPS detection, and wearable device detection.

9. The method according to any one of claims 1-8, wherein the processing of the received object data comprises the step of:
determining a position of the detected object in relation to the vehicle based on the received object data.

10. The method according to any one of claims 1-9, wherein the processing of the received object data further comprises the step of:
determining a speed and direction of the detected object in relation to the vehicle based on the received object data.

11. A computer program product comprising a non-transitory computer readable medium, having thereon a computer program comprising program instructions, the computer program being loadable into a data processing unit and configured to cause execution of the method steps performed by the detector and/or the method steps performed by the vehicle according to any of claims 1 through 10 when the computer program is run by the data processing unit.

12. An arrangement (201,207,208,301,307,308) for reducing a risk of collision with an obscured object, comprising:
a memory comprising executable instructions, one or more processors configured to communicate with the memory wherein the one or more processors are configured to cause the arrangement to:
detect the object (203,204) in proximity of a detector,
determine object data of the detected object in response to the detection,
determine any vehicle in motion in a direction towards an area where the detected object is or may be present, and
transmit the determined object data of the detected object to the vehicle.

13. The arrangement according to claim 12, wherein the arrangement comprises a sensor arranged on any one of a moving vehicle, a non-moving vehicle, a building, a wall, a lamp-post, and road-side unit.

14. An arrangement (202,302) for reducing a risk of collision with an obscured object, comprising:
a memory comprising executable instructions, one or more processors configured to communicate with the memory wherein the one or more processors are configured to cause the arrangement to:
receive object data of the object,
process the received object data to assess the collision risk based on a predicted route, and
mitigate the collision risk based on the processed object data when the collision risk has been assessed.

15. The arrangement according to claim 14, wherein the one or more processors are configured to further cause the arrangement to:
discard the received object data when the collision risk has been ruled out.

16. The arrangement according to any of claims 14-15, wherein the mitigation of the collision risk comprises warning about the detected object and/or displaying a representation of the detected object based on the processed object data when the collision risk has been assessed.

17. The arrangement according to any of claims 14-16, wherein the mitigation of the collision risk comprises automatically re-routing or braking or adjusting a speed of the vehicle.

18. A vehicle (202,302) comprising the arrangement according to any of claims 14-17.

19. A system for reducing a risk of collision with an obscured object, comprising:
a detecting module (401) configured to detect an object in proximity of a detector,
a determining module (402) configured to determine object data of the detected object in response to the detection,
a determining module (403) configured to determine any vehicle in motion in a direction towards an area where the detected object is or may be present,
a transmitting module (404) configured to transmit the determined object data of the detected object to the vehicle,
a receiving module (405) configured to receive the transmitted object data, a processing module (406) configured to process the received object data to assess the collision risk based on a predicted route of the vehicle, and
a risk mitigation module (407) configured to mitigate the collision risk based on the processed object data when the collision risk has been assessed.
